# FASCICULE DE BREVET EUROPEEN

(11) **EP 3 899 792 B1**
(45) Date de publication et mention de la délivrance du brevet: **05.10.2022**
(21) Numéro de dépôt: 19813060.1
(22) Date de dépôt: 06.12.2019
(51) Int. Cl.: G06K 19/02, G06K 19/077

(54) **PROCÉDÉE DE FABRICATION D'UNE CARTE À PUCE RADIOFRÉQUENCE MÉTALLIQUE À PERMITTIVITE ÉLECTROMAGNÉTIQUE AMÉLIORÉE**
HERSTELLUNGSVERFAHREN EINER METALLISCHEN FUNKFREQUENZ-CHIPKARTE MIT VERBESSERTER ELEKTROMAGNETISCHER LEITFÄHIGKEIT
METHOD FOR MANUFACTURING A METAL RADIOFREQUENCY SMART CARD WITH IMPROVED ELECTROMAGNETIC PERMITTIVITY

(30) Priorité: 21.12.2018 EP 18306803
(43) Date de publication de la demande: 27.10.2021
(73) Titulaire: Thales Dis France SAS, 92190 Meudon (FR)
(72) Inventeur: MENDEZ, Lucile, 13881 Gémenos Cedex (FR); SEBAN, Frédérick, 13881 Gémenos Cedex (FR); COLOMBARD, Claude, 13881 Gémenos Cedex (FR); BUYUKKALENDER, Arek, 13881 Gémenos Cedex (FR); MERIDIANO, Jean-Luc, 13881 Gémenos Cedex (FR)
(74) Mandataire: Lotaut, Yacine Diaw
(86) Numéro de dépôt international: PCT/EP2019/084085
(87) Numéro de publication internationale: WO 2020/126571

(56) Documents cités:
- EP-A2- 2 612 764
- WO-A1-2018/178314
- US-A1- 2015 269 477
- US-A1- 2018 132 376

## Description

### Domaine de l'invention.

L'invention concerne le domaine des cartes à puce sans-contact comportant une forte teneur métallique ou une plaque métallique s'étendant jusqu'à au moins un bord de la carte et un module à puce de circuit intégré radiofréquence.

Elle vise en particulier la fabrication de carte à puce comportant au moins une plaque métallique dans le corps de carte et présentant une permittivité électromagnétique améliorée.

Les cartes à puce peuvent être du type hybride (contacts et sans-contact) ou purement sans-contact (sans bornier de contacts électriques). La plaque est en principe comprise dans un insert recouvert par au moins une feuille ou film de couverture externe.

Les cartes à puce peuvent avoir un module de carte à puce comportant un transpondeur radiofréquence avec la puce et l'antenne portées sur un substrat isolant du module. Les modules de carte à puce radiofréquence sont généralement encartés dans une cavité du corps de carte. Ils peuvent aussi connecter une antenne logée dans le corps de carte via des éléments d'interconnexion électriques, reliant des plages terminales de l'antenne à des zones de connexion de la puce placées sur le module.

Un module radiofréquence de carte à puce peut être couplé avec une antenne passive ou relais logée dans le corps de carte.

L'invention vise plus particulièrement les cartes métalliques bancaires, de paiement, de transport.

### Art antérieur

Le brevet FR 2743649 décrit un module de carte à puce à antenne et /ou plages de contact pouvant être incorporé dans une cavité de corps de carte ou pouvant former une étiquette électronique RFID.

Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur du corps de carte en matière plastique ou en surface externe du corps de carte tel de l'aluminium, du titane, de l'or. Le métal procure une sensation de lourdeur de la carte qui est très appréciée par les utilisateurs. Il donne aussi un aspect esthétique visible qui en fait un produit haut de gamme pour privilégiés.

La demande de brevet US2015/0269477 A1 décrit une carte à puce métallique comportant une antenne sur un substrat et une plaque de métal avec une série de trous, disposée sur le substrat. Les trous sont agencés au-dessus du parcours des spires de l'antenne.

Les performances de communications radiofréquence testées par les inventeurs sont insuffisantes malgré la présence de trous au-dessus du parcours des spires d'antenne.

La demande de brevet WO2018/178314 A1 décrit une carte à puce métallique comprenant un module de puce répondeur présentant une antenne de module, et un corps de carte comprenant deux couches métalliques discontinues, chaque couche ayant une fente chevauchant l'antenne de module, et les fentes étant orientées différemment l'une de l'autre.

Il y a actuellement une forte demande pour ce genre de carte à puce intégrant des matières lourdes mais la fabrication n'est pas aisé ou le rapport poids / performance de communication radiofréquence n'est pas optimal.

### Problème technique.

L'invention vise à résoudre les inconvénients précités.

En particulier, l'invention vise une structure de carte métallique qui comporte de meilleures performances de communication que dans l'art antérieur.

La carte peut de préférence avoir également une structure satisfaisant les contraintes de tenues mécaniques-en terme d'ISO pour tous les autres tests et de durabilité dans le temps.

### Résumé de l'invention.

L'invention consiste selon un aspect préféré en une disposition (ou une configuration) particulière des perforations ou évidements dans une plaque de métal de manière à augmenter la permittivité de la plaque métallique eu égard un champ électromagnétique d'un lecteur radiofréquence.

Les trous sont allongés et disposés le long du parcours de spires d'antenne et des passages sans métal s'étendent de chaque fente jusqu'au bord de la plaque pour y déboucher.

Cette configuration des perforations permet une bonne répartition du champ radiofréquence dans la carte malgré la présence de métal et qui conduit à des bonnes performances de communication aussi bien dans les deux sens de l'axe Z perpendiculaires au plan principal X,Y de la carte mais aussi en latéralement dans ce plan.

A cet effet, l'invention a pour objet un procédé de fabrication d'un insert métallique pour carte à puce radiofréquence, ledit procédé comprenant les étapes de formation ou fourniture d'un assemblage comportant un substrat isolant portant :
- au moins une spire d'antenne reposant sur ledit substrat, comportant une interface de connexion à un module radiofréquence,
- une plaque de métal comportant des perforations de permittivité radiofréquence et une cavité de réception d'un module à puce radiofréquence, agencées respectivement en regard de ladite spire d'antenne et de son interface de connexion.

Le procédé est caractérisé en ce que lesdites perforations comprennent au moins deux fentes s'étendant chacune le long et en regard d'une portion de spires d'antenne, chaque fente débouchant également sur la tranche de la plaque via un passage ménagé sur ladite tranche.

Selon d'autres caractéristiques :
- Lesdites portions de spire s'étendent de préférence à proximité immédiate de bordures latérales ou longitudinales de la plaque ;
- Le procédé comprend la formation dans ladite plaque, d'au moins une troisième fente continue ou d'une troisième et quatrième fentes continues, chacune desdites fentes s'étendant entre des première et secondes portions de spire, diamétralement ou symétriquement opposées l'une de l'autre ou séparées par une portion de surface de couplage ;
- Lesdites fentes forment un passage électromagnétiquement perméable au rayonnement induit par les spires ;
- La puce peut être connectée de manière ohmique ou capacitive ou inductive à ladite antenne ;
- L'insert peut être recouvert d'au moins une ou plusieurs feuilles polymère de couverture ou de décoration.

L'invention a également pour objet un insert métallique pour carte à puce radiofréquence, ledit insert comprenant un assemblage d'un substrat isolant avec une plaque de métal, ledit substrat portant au moins une spire d'antenne et ladite plaque comportant des perforations de permittivité radiofréquence et une cavité de réception d'un module à puce radiofréquence, lesdites perforations étant agencées en regard de ladite spire d'antenne,
caractérisé en ce que lesdites perforations comprennent au moins deux fentes s'étendant chacune le long de bords opposés ou parallèles de ladite plaque, le long et en regard d'une portion de spire d'antenne, chaque fente débouchant également sur la tranche de la plaque via un passage ménagé sur ladite tranche.

### Descriptif des figures :

- La figure 1 illustre une antenne réalisée sur un substrat isolant selon une étape d'un mode de mise en œuvre procédé de l'invention;
- La figure 2 illustre des ouvertures réalisées dans une plaque métallique selon un mode premier préféré de mise en œuvre du procédé de l'invention ;
- La figure 3 illustre des ouvertures réalisées dans une plaque métallique selon un second mode préféré de mise en œuvre du procédé de l'invention ;
- La figure 4 illustre un assemblage conforme au premier mode préféré de mise en œuvre de l'invention avec la plaque de la figure 2;
- La figure 5 illustre un assemblage conforme au second mode préféré de mise en œuvre de l'invention avec la plaque de la figure 3;
- La figure 6 illustre des étapes du procédé d'un mode préféré de mise en œuvre du procédé de l'invention.

### Description.

Le procédé de fabrication d'un insert métallique pour carte à puce radiofréquence va maintenant être décrit.

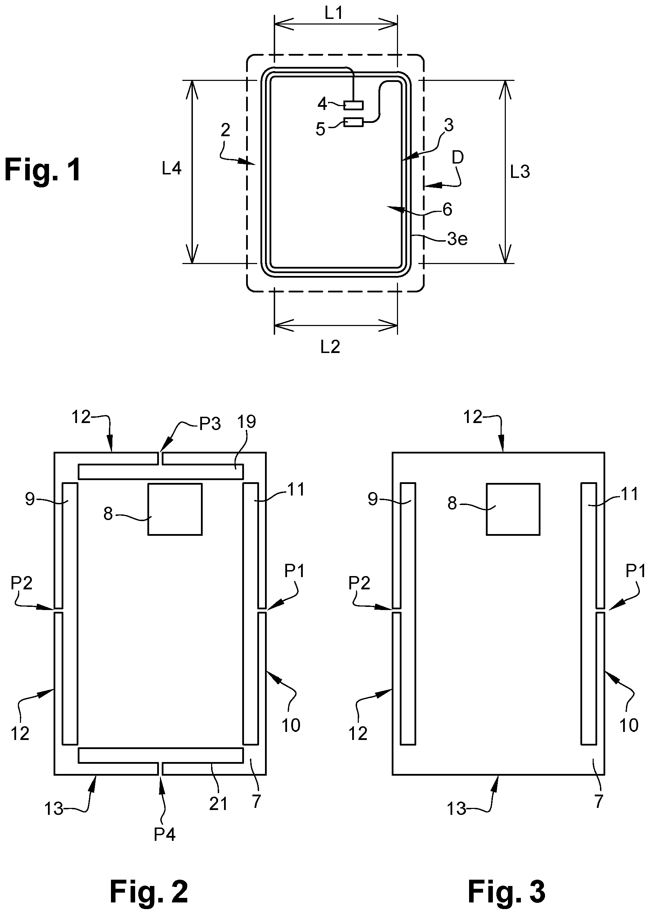

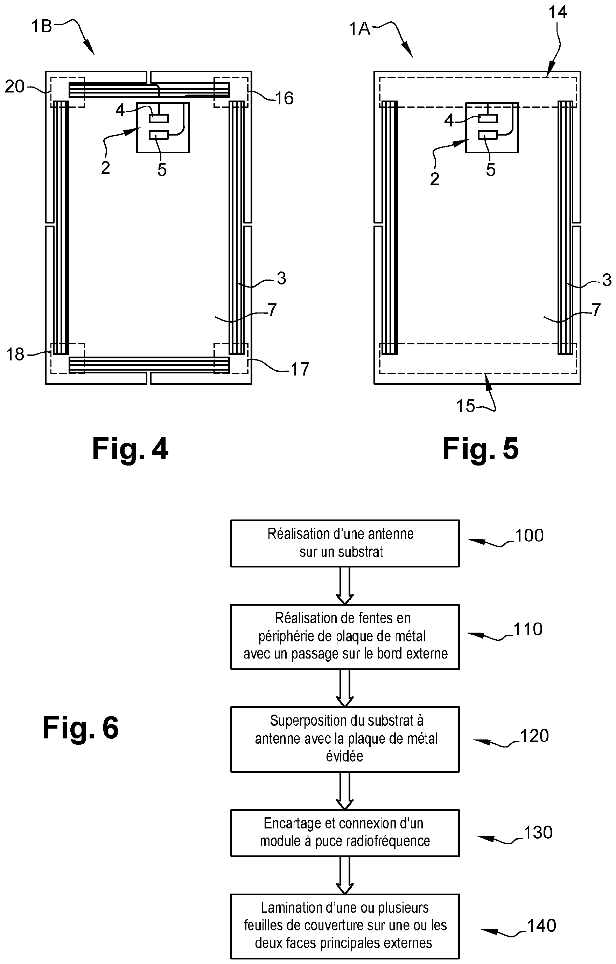

Selon une caractéristique, le procédé prévoit la formation ou la fourniture d'un assemblage 1 (figure 4) comportant un substrat isolant 2 visible sur les figures 1 et 3 et une plaque de métal visible sur la figure 2.

A la figure 1, le substrat 2 porte au moins une spire d'antenne 3 avec deux extrémités terminales 4, 5, reposant sur ledit substrat, et une surface de couplage 6 à l'intérieur de la spire externe 3e de l'antenne 3;

L'antenne au format carte à puce peut être réalisée en même temps qu'une pluralité d'antennes sur un substrat isolant de grand format (exemple 60 x 100 cm), notamment en matière plastique telle que PVC, PC, PET. L'antenne peut être extraite ultérieurement au niveau des pointillées « D » pouvant illustrer la périphérie de l'insert, par poinçonnage ou découpe laser en étant associée ou non à une plaque métallique.

L'antenne est réalisée ici par incrustation de fil par ultrasons mais peut être réalisée par toute technique connue telle que la gravure de cuivre, d'aluminium, la sérigraphie, un dépôt de jet de matière conductrice, une découpe d'antenne par poinçonnage ou laser dans une feuille métallique.

L'antenne peut comporter ses extrémités terminales 4, 5 d'interconnexion à un module reposant aussi de préférence sur le substrat 3 sans être une obligation. Ses extrémités peuvent demeurer en l'air. Dans l'exemple, les extrémités terminales sont réalisées aussi par zigzags de fils incrustés. Ils peuvent être réalisés par toute technique connue relative à l'antenne ci-dessus.

Les extrémités peuvent constituer ou comprendre ou être remplacées par une interface de couplage et/ou d'interconnexion tel que par exemple une bobine de couplage pour connecter un transpondeur radiofréquence dans un module à antenne.

L'assemblage 1 comprend aussi, comme indiqué ci-dessus, une plaque de métal 7 (fig. 2 ou fig. 3) comportant des perforations 9, 11, 19, 21 de permittivité radiofréquence, une cavité 8 de réception d'un module à puce radiofréquence.

Les perforations et la cavité traversent la plaque de part en part. Les perforations 9 et 11 sont agencées respectivement en regard de ladite spire d'antenne et de ses extrémités.

Selon une caractéristique de ce mode préféré, les perforations comprennent au moins deux fentes longitudinales 9, 11 s'étendant chacune sur au moins un des bords (10, 12) (de préférence diamétralement ou symétriquement) opposés de ladite plaque 7, le long et en regard d'une portion L3, L4 de spire d'antenne (3), chaque fente 9, 11 débouchant également sur la tranche 10, 12 de la plaque via un passage P1, P2 ménagé sur ladite tranche 10, 12.

Le passage P1, P2 peut être situé indifféremment à tout endroit sur le côté ou la tranche de la carte. Dans les exemples, les passages sont situés sensiblement au centre de chaque fente ou ouverture allongée 9, 11. Toutefois, chaque passage peut être positionné sensiblement dans une zone centrale ou zone de début ou zone de fin de chaque fente.

Les passages (ou mini-fentes ou découpe) peuvent avoir, par exemple une largeur d'environ 0,5 à 5 mm.

Ces portions L1, L2 de spires sont symétriquement opposées l'une à l'autre ou séparées par une surface de couplage.

Dans l'exemple (figure 4), les portions de spires L1 et L2 ont sensiblement la largeur d'un corps de carte à puce. De fait les fentes 9 et 11 ont sensiblement les mêmes longueurs que ces portions de spires d'antenne.

Les portions de spires L1 et L2 sont ici symétriquement opposées car les fentes couvrent les côtés transversaux de l'antenne 3 de forme rectangulaire s'étendant le long des bords périphériques de l'insert de carte à puce ou de l'assemblage 1. Ces portions de spires (ici rectilignes) sont séparées d'une zone centrale intermédiaire 6 formant une surface de couplage électromagnétique à l'intérieur de la spire externe 3e de l'antenne en forme de spirale ou bobine.

Alternativement, les portions L1 et L2 de spires peuvent être remplacées respectivement par des portions longitudinales L3 et L4.

Les longueurs L1, L2, L3, L4 peuvent être comprises entre 3 cm et 5 cm. De préférence si on réalise des ouvertures ou perforations L1-L4 sur la largeur de la carte, on pourrait avoir une longueur comprise entre 2,5 cm à 4,9 cm. Si on réalise des ouvertures ou perforations L1-L4 sur la longueur on pourrait avoir entre 4,5 cm 8,2 cm.

Les fentes 9 et 11 peuvent s'étendre sur presque toute la largeur ou longueur de la plaque métallique et être juste en retrait de quelques millimètres 4 à 15 mm des bords périphériques longitudinaux.

Les fentes ont ici une largeur « La » de 5 à 6 mm pour découvrir 6 spires d'antenne. Plus exactement, la largeur des ouvertures ou fentes peut être de préférence supérieur à la largeur du faisceau de spires d'au moins 1 mm de part et d'autre du faisceau.

La plaque métallique est ici une plaque d'acier d'une épaisseur égale à environ 500 µm. Elle peut varier de 150 à 650 µm. Elle peut être composée d'un assemblage de plusieurs plaques métalliques.

Alternativement, l'antenne a une forme non rectangulaire, ovale ou arrondie et les portions de spires visées peuvent être diamétralement opposées.

De préférence, les portions de spire s'étendent à proximité immédiate de bordures latérales ou longitudinales de la plaque. Les spires peuvent par exemple être en retrait de 2 à 5 mm de ces bordures de manière à avoir le maximum de surface de couplage à l'intérieur de la spire externe.

Selon une autre caractéristique, le procédé selon le mode préféré peut comprendre la formation dans ladite plaque, d'au moins quatre fentes 9, 11, 19, 21, chacune desdites fentes s'étendant respectivement sur au moins un des quatre côtés de ladite plaque, le long et en regard d'une portion significative de spire d'antenne, chaque fente débouchant via un passage ménagé, également sur un des bords externes de ladite plaque adjacent ou parallèle à ladite fente.

Avantageusement, les fentes allongées forment un passage électro-magnétiquement plus perméable et plus efficace qu'une série de trous de l'art antérieur offrant comparativement la même surface de métal enlevé.

Les passages P1-P4, exempts de métal, peuvent être remplis de résine ultérieurement notamment lors de l'assemblage avec des feuilles de couvertures.

Sur les figures 4 ou 5, un module simplement radiofréquence M1 peut être connecté à l'antenne avant d'être assemblée à la plaque de la figure 2 ou celle de la figure 3.

Alternativement, un module M2 de carte à puce hybride (contacts et sans contact) peut notamment être connecté après laminage de feuilles et usinage d'une cavité.

Les caractéristiques des éléments assemblés tels qu'indiqués sur la figure 4 ou 5 ont permis de bons résultats de performance :
- La plaque en acier de 300 µm à 450 µm
- Le corps de carte est en PVC /
- Puce SLC32G298 / Mask G298 / Infineon

Les résultats sont conforment à 100% aux standard EMVCo avec un H mini de 1.1 A/m avec une antenne standard de 5 tours.

Dans l'exemple, le module peut être connecté aux portions terminales 4, 5 d'interconnexion de l'antenne 3. Toutefois, le module peut être connecté de manière capacitive par exemple en ayant au moins une plaque de condensateur en regard de l'une des plages 4 ou 5.

Le module peut aussi être connecté de manière inductive avec l'antenne qui peut être configurée de manière à former une antenne passive ou relais.

Par exemple, la cavité peut comprendre de manière connue une petite bobine (non représentée) au niveau des plages 4 et 5 afin de former une boucle de couplage électromagnétique qui se couple avec un module à antenne et puce radiofréquence introduit au-dessus de la bobine de couplage.

Ainsi, la puce radiofréquence du module peut être connectée de manière ohmique ou capacitive ou inductive à ladite antenne 3.

L'assemblage ou insert 1 peut être recouvert ensuite d'au moins une ou plusieurs feuilles ou couches polymère de couverture ou de décoration. Il peut être découpé ensuite au format carte à puce standard en présentant des bords de carte métalliques.

Dans le cas où les bords de la plaque ne sont pas visibles, le procédé peut prévoir de disposé des plaques métalliques d'un format légèrement inférieur au format d'une carte à puce sur chaque substrat 3 et de laminer des feuilles de couvertures par la suite.

Préalablement à l'adjonction de feuilles de recouvrement, les fentes (voire la cavité 8) sont de préférence remplies de résine polymère. La cavité 8 peut être mise à jour ultérieurement à nouveau avec les plages d'interconnexion 4, et 5 après le laminage des feuilles de couverture

D'une manière générale, l'invention prévoit une structure d'insert métallique pour carte à puce radiofréquence comportant les caractéristiques ci-après et pouvant être obtenus notamment par les étapes du procédé illustré en figure 6.

L'insert peut comprendre généralement un assemblage 1 (figure 4) d'un substrat isolant 2 avec une plaque de métal 7.

Aux figures 2, 3, le substrat porte au moins une spire d'antenne 3 et la plaque 7 comporte des perforations de permittivité radiofréquence et une cavité 8 de réception d'un module à puce radiofréquence. La cavité peut s'effectuer en même temps que les fentes ou ultérieurement après avoir recouvert l'assemblage d'au moins une feuille de couverture ou plusieurs sur au moins une des faces principales.

Les perforations sont agencées en regard de la spire d'antenne 3.

Selon une caractéristique les perforations comprennent au moins deux fentes longitudinales 9, 11, (voire quatre de préférence) s'étendant chacune, de préférence, sur au moins un des bords 10, 12 (symétriquement ou diamétralement) opposés de ladite plaque 7, le long et en regard d'une portion L3, L4 de spire d'antenne 3, chaque fente 9, 11 débouchant également sur la tranche 10, 12 de la plaque via un passage (ou une brèche P1, P2) ménagé sur ladite tranche 10, 12.

Le cas échéant, l'assemblage peut comprendre des bâtonnets de ferrite introduits dans les fentes (et en regards de la cavité de module) pour améliorer le passage de flux électromagnétique au moins dans un sens sensiblement perpendiculaire à un plan principal de la carte et alourdir encore plus la plaque de métal. Les bâtonnets de ferrite permettent au moins d'améliorer la communication vers une face de la carte.

A la figure 5 des étapes du procédé sont illustrées.
- A l'étape 100, une antenne est réalisée sur un substrat
- A l'étape 110, deux fentes sont réalisées dans une plaque de métal et le cas échéant aussi une cavité 8 ou une découpe 18 pour recevoir un module. Les fentes sont réalisées avec un passage P1-P4 débouchant sur le bord externe adjacent;
- A l'étape 120, le substrat à antenne est superposé (assemblé) avec la plaque de métal évidée à l'étape précédente, les deux fentes 19, 21 étant agencées sur ou en regard des portions d'antenne ou de spires 3;
- A l'étape 130, un module à puce radiofréquence peut être connecté à une interface de communication 4, 5 (Le module et l'antenne peuvent être configurés autrement pour une connexion (plages d'interconnexion, bobine de couplage, capacité) ;
- A l'étape 140 d'une ou plusieurs feuilles de couverture sont laminée(s) sur un ou les deux faces principales externes de l'assemblage 1.
- Le cas échéant, en alternative, la cavité 8 dans la laque peut être remplie de résine avant lamination de feuilles de recouvrement puis la cavité de réception de module peut être réalisée après assemblage des feuilles de recouvrement.

La carte à puce selon l'invention peut utiliser un module à puce radiofréquence hybride comportant des plages de contacts qui peuvent être également perforées, en dehors des zones réservées de contact standardisés afin d'améliorer encore la permittivité électromagnétique.

Le cas échéant, le procédé peut prévoir dans chaque mode de réalisation de réaliser des amincissements 14-20 de la plaque à des endroits situés en regard des spires d'antenne 3. Ceci afin d'éviter des surépaisseurs.

Dans tous les exemples, la plaque du corps de carte peut comprendre un assemblage de plaques métalliques soudées ensemble ou assemblées par l'intermédiaire d'une couche fine adhésive. Ce dernier assemblage peut améliorer la tenue mécanique de flexion / torsion.

Ainsi, l'invention permet une fabrication aisée de carte à puce comprenant l'insert décrit ci-dessus pour des performances radiofréquences compatibles avec des standards de carte à puce notamment EMVco.

## Revendications

1. Procédé de fabrication d'un insert métallique pour carte à puce radiofréquence, ledit procédé comprenant les étapes de formation ou fourniture d'un assemblage (1) comportant un substrat isolant (2) portant :
- au moins une spire d'antenne (3) reposant sur ledit substrat, comportant une interface de connexion (4, 5) à un module radiofréquence,
- une plaque de métal (7) comportant des perforations de permittivité radiofréquence et une cavité (8) de réception d'un module à puce radiofréquence, agencées respectivement en regard de ladite spire d'antenne et de son interface de connexion (4, 5),
**caractérisé en ce que** lesdites perforations comprennent au moins deux fentes longitudinales (9, 11) s'étendant chacune le long et en regard d'une portion (L3, L4) de spire d'antenne (3), chaque fente (9, 11) débouchant également sur la tranche de la plaque via un passage (P1, P2) ménagé sur ladite tranche (10, 12).

2. Procédé selon la revendication précédente, **caractérisé en ce que** lesdites portions de spire s'étendent à proximité immédiate de bordures latérales ou longitudinales de la plaque.

3. Procédé selon l'une des revendications précédentes, **caractérisé en ce qu'**il comprend la formation dans ladite plaque, d'au moins quatre fentes, chacune desdites fentes s'étendant respectivement sur au moins un des quatre côtés de ladite plaque, le long et en regard d'une portion significative de spire d'antenne, chaque fente débouchant via un passage ménagé, également sur un des bords externes de ladite plaque adjacent ou parallèle à ladite fente.

4. Procédé selon l'une des revendications précédentes, **caractérisé en ce que** lesdites fentes forment un passage électromagnétiquement perméable.

5. Procédé selon l'une des revendications précédentes, **caractérisé en ce que** ladite puce est connectée de manière ohmique ou capacitive ou inductive à ladite antenne.

6. Procédé selon l'une des revendications précédentes, **caractérisé en ce que** ledit insert (10) est recouvert d'au moins une ou plusieurs feuilles polymère de couverture ou de décoration.

7. Insert métallique pour carte à puce radiofréquence, ledit insert comprenant un assemblage (1) d'un substrat isolant(2) avec une plaque de métal (7), ledit substrat portant au moins une spire d'antenne (3) reposant sur ledit substrat, comportant une interface de connexion (4, 5) à un module radiofréquence,
- une plaque de métal (7) comportant des perforations de permittivité radiofréquence et une cavité (8) de réception d'un module à puce radiofréquence, traversant la plaque et agencées respectivement en regard de ladite spire d'antenne et de son interface de connexion (4, 5),
**caractérisé en ce que** lesdites perforations comprennent au moins deux fentes longitudinales (9, 11) s'étendant chacune sur au moins un des bords (10, 12) opposés de ladite plaque (7), le long et en regard d'une portion (L3, L4) de spire d'antenne (3), chaque fente (9, 11) débouchant également sur la tranche (10, 12) de la plaque via un passage (P1, P2) ménagé sur ladite tranche (10, 12).

8. Insert selon la revendication précédente, **caractérisé en ce que** l'assemblage(1) peut comprendre des bâtonnets de ferrite introduits dans les fentes (9, 11, 19, 21).

9. Insert selon l'une des revendications 7 à 8, **caractérisé en ce que** chaque passage (P1-P4) est positionné sensiblement dans une zone centrale ou zone de début ou zone de fin de chaque fente.

10. Carte à puce comprenant l'insert selon l'une des revendications 7 à 9.

## Patentansprüche

1. Verfahren zur Herstellung eines Metalleinsatzes für eine Hochfrequenz-Chipkarte, wobei das Verfahren die Schritte des Bildens oder Bereitstellens einer ein isolierendes Substrat (2) aufweisenden Baugruppe (1) umfasst, das Folgendes trägt:
- mindestens eine Antennenwindung (3), die auf dem Substrat aufliegt und eine Schnittstelle (4, 5) zur Verbindung mit einem Hochfrequenzmodul aufweist,
- eine Metallplatte (7), die Hochfrequenz-Permittivitätsperforationen und einen Hohlraum (8) zur Aufnahme eines Hochfrequenz-Chipmoduls aufweist, die jeweils gegenüber der Antennenwindung und ihrer Verbindungsschnittstelle (4, 5) angeordnet sind, **dadurch gekennzeichnet, dass** die Perforationen mindestens zwei Längsschlitze (9, 11) umfassen, die sich jeweils entlang und gegenüber einem Abschnitt (L3, L4) der Antennenwindung (3) erstrecken, wobei jeder Schlitz (9, 11) sich zudem zu dem Rand der Platte über einen in dem Rand (10, 12) ausgebildeten Durchgang (P1, P2) öffnet.

2. Verfahren nach dem vorhergehenden Anspruch, **dadurch gekennzeichnet, dass** sich die Windungsabschnitte in unmittelbarer Nähe von Seiten- oder Längskanten der Platte erstrecken.

3. Verfahren nach einem der vorhergehenden Ansprüche, **dadurch gekennzeichnet, dass** es die Bildung von mindestens vier Schlitzen in der Platte umfasst, wobei sich jeder der Schlitze jeweils auf mindestens einer der vier Seiten der Platte entlang und gegenüber einem wesentlichen Abschnitt der Antennenwindung erstreckt, wobei sich jeder Schlitz über einen Durchgang ebenfalls zu einem der Außenränder der Platte neben oder parallel zu dem Schlitz öffnet.

4. Verfahren nach einem der vorhergehenden Ansprüche, **dadurch gekennzeichnet, dass** die Schlitze einen elektromagnetisch durchlässigen Durchgang bilden.

5. Verfahren nach einem der vorhergehenden Ansprüche, **dadurch gekennzeichnet, dass** der Chip eine ohmsche oder kapazitive oder induktive Verbindung mit der Antenne aufweist.

6. Verfahren nach einem der vorhergehenden Ansprüche, **dadurch gekennzeichnet, dass** der Einsatz (10) mit mindestens einer oder mehreren Polymer-Deck- oder Dekorfolien bedeckt ist.

7. Metalleinsatz für eine Hochfrequenz-Chipkarte, wobei der Einsatz eine Baugruppe (1) aus einem isolierenden Substrat (2) mit einer Metallplatte (7) umfasst, wobei das Substrat mindestens eine Antennenwindung (3) trägt, die auf dem Substrat aufliegt und eine Schnittstelle (4, 5) zur Verbindung mit einem Hochfrequenzmodul umfasst,
- eine Metallplatte (7), die Hochfrequenz-Permittivitätsperforationen und einen Hohlraum (8) zur Aufnahme eines Hochfrequenz-Chipmoduls umfasst, die die Platte durchsetzen und jeweils gegenüber der Antennenwindung und ihrer Verbindungsschnittstelle (4, 5) angeordnet sind, **dadurch gekennzeichnet, dass** die Perforationen mindestens zwei Längsschlitze (9, 11) umfassen, die sich jeweils auf mindestens einem der gegenüberliegenden Ränder (10, 12) der Platte (7) entlang und gegenüber einem Abschnitt (L3, L4) der Antennenwindung (3) erstrecken, wobei jeder Schlitz (9, 11) sich zudem zu dem Rand (10, 12) der Platte über einen in dem Rand (10, 12) ausgebildeten Durchgang (P1, P2) öffnet.

8. Einsatz nach dem vorhergehenden Anspruch, **dadurch gekennzeichnet, dass** die Baugruppe (1) Ferritstäbchen umfassen kann, die in die Schlitze (9, 11, 19, 21) eingeführt sind.

9. Einsatz nach einem der Ansprüche 7 bis 8, **dadurch gekennzeichnet, dass** jeder Durchgang (P1-P4) im Wesentlichen in einem mittleren Bereich oder Anfangsbereich oder Endbereich jedes Schlitzes positioniert ist.

10. Chipkarte, umfassend den Einsatz nach einem der Ansprüche 7 bis 9.

## Claims

1. A method of manufacturing a metal insert for radiofrequency smart card, said method comprising the steps of forming or supplying an assembly (1) comprising an insulating substrate (2) bearing:
- at least one antenna coil (3) resting on said substrate, comprising a connection interface (4, 5) to a radiofrequency module,
- a metal plate (7) comprising radiofrequency permittivity perforations and a cavity (8) for receiving a radiofrequency chip module, arranged respectively facing said antenna coil and the connection interface thereof (4, 5),
**characterized in that** said perforations comprise at least two longitudinal slots (9, 11) each extending along and facing a portion (L3, L4) of antenna coil (3), each slot (9, 11) also opening onto the edge of the plate via a passage (P1, P2), made on said edge (10, 12).

2. The method according to the preceding claim, **characterized in that** said coil portions extend to the immediate proximity of lateral or longitudinal borders of the plate.

3. The method according to one of the preceding claims, **characterized in that** it comprises forming at least four slots in said plate, each of said slots extending respectively over at least one of the four sides of said plate, along and facing a significant portion of antenna coil, each slot also opening via a passage, onto one of the outer edges of said plate adjacent or parallel to said slot.

4. The method according to one of the preceding claims, **characterized in that** said slots form an electromagnetically permeable passage.

5. The method according to one of the preceding claims, **characterized in that** said chip is ohmically or capacitively or inductively connected to said antenna.

6. The method according to one of the preceding claims, **characterized in that** said insert (10) is covered with at least one or several polymer cover or decorative sheets.

7. A metal insert for radiofrequency smart card, said insert comprising an assembly (1) of an insulating substrate (2) with a metal plate (7), said substrate bearing at least one antenna coil (3) resting on said substrate, comprising a connection interface (4, 5) to a radiofrequency module,
- a metal plate (7) comprising radiofrequency permittivity perforations and a cavity (8) for receiving a radiofrequency chip module, passing through the plate and arranged respectively facing said antenna coil and the connection interface thereof (4, 5),
**characterized in that** said perforations comprise at least two longitudinal slots (9, 11) each extending over at least one of the opposite edges (10, 12) of said plate (7), along and facing a portion (L3, L4) of antenna coil (3), each slot (9, 11) also opening onto the edge (10, 12) of the plate via a passage (P1, P2) made on said edge (10, 12).

8. The insert according to the preceding claim, **characterized in that** the assembly (1) may comprise ferrite rods inserted into the slots (9, 11, 19, 21).

9. The insert according to one of claims 7 to 8, **characterized in that** each passage (P1-P4) is positioned substantially in a central zone or starting zone or ending zone of each slot.

10. A smart card comprising the insert according to one of claims 7 to 9.
